# EUROPÄISCHE PATENTSCHRIFT

(11) **EP 3 455 587 B1**
(45) Veröffentlichungstag und Bekanntmachung des Hinweises auf die Patenterteilung: **15.04.2020**
(21) Anmeldenummer: 17723331.9
(22) Anmeldetag: 09.05.2017
(51) Int. Cl.: G01C 21/32

(54) **VERFAHREN UND VORRICHTUNG ZUR ÜBERTRAGUNG VON DURCH EIN FAHRENDES FAHRZEUG ERFASSTEN FAHRWEGDATEN AN EINE ZENTRALE DATENBANK UNTER VERBESSERTER WAHRUNG DER PRIVATSPHÄRE**
TRANSMISSION OF ROADWAY DATA CAPTURED BY A RUNNING VEHICLE TO A CENTRAL DATABASE UNDER IMPROVED PRIVACY PROTECTION
TRANSMISSION À UNE BASE DE DONNÉES CENTRALE DE DONNÉES D'UN CHEMIN CAROSSABLE SAISIES PAR UN VÉHICULE ROULANT SOUS PRÉSERVATION AMÉLIORÉE DE LA VIE PRIVÉE

(30) Priorität: 10.05.2016 DE 102016207984
(43) Veröffentlichungstag der Anmeldung: 20.03.2019
(73) Patentinhaber: Continental Automotive GmbH, 30165 Hannover (DE)
(72) Erfinder: LINDEMANN, Robert, 65193 Wiesbaden (DE); DAGLIOGLU, Hueseyin, 61449 Steinbach (DE)
(86) Internationale Anmeldenummer: PCT/EP2017/061044
(87) Internationale Veröffentlichungsnummer: WO 2017/194533

(56) Entgegenhaltungen:
- WO-A1-2011/067472
- DE-A1-102007 042 877

## Beschreibung

### Gebiet der Technik

Die vorliegende Erfindung bezieht sich auf das Erfassen von Fahrwegdaten durch Sensoren eines Fahrzeugs und das Übertragen der erfassten Fahrwegdaten an eine fahrzeugexterne Datenbank.

### Stand der Technik

Um Daten zu Fahrweg-Eigenschaften in einer Datenbank, beispielsweise für autonomes oder teilautonomes Fahren, aktuell zu halten, müssen die Daten regelmäßig auf den neuesten Stand gebracht werden. Die Erfassung der Fahrweg-Eigenschaften kann von auf den Straßen fahrenden Fahrzeugen durchgeführt werden, die jeweils mit geeigneten Sensoren und einer Vorrichtung zur Erfassung der Geo-Position ausgestattet sind. Die erfassten Daten können dann über eine Fahrzeug-zu-X-Kommunikation oder eine Mobilfunkverbindung an eine Datenbank gesendet werden, wo sie zu einem Datensatz konsolidiert werden, der dann an andere Fahrzeuge gesendet werden kann, z.B. für eine Routenberechnung oder dergleichen.

Viele Fahrzeugnutzer haben Bedenken, dass die Erfassung der Position während der Fahrt zur Erstellung eines Profils genutzt werden kann, und stehen deshalb für die Erfassung von Daten nicht zur Verfügung.

WO 2011/067472 A1 betrifft Verfahren zum Abbilden von Straßenzuständen, insbesondere Reibung. Bei dem Verfahren wird die Beschleunigung des Fahrzeugs mittels eines Beschleunigungssensors gemessen, die Position des Fahrzeugs mittels Positi onierungsmitteln überwacht und der gemessene Beschleunigungswert mit den Positionsdaten des Messortes kombiniert.

DE 10 2007 042 877 A1 betrifft ein in Kraftfahrzeug mit einer Erfassungseinrichtung zum Erfassen einer physikalischen Fahrbahneigenschaft der durch das Kraftfahrzeug befahrenen Fahrbahn, mit einer Positionsermittlungseinrichtung zum Ermitteln der Position des Kraftfahrzeuges, mit einer Sendeeinrichtung zum Senden von Fahrbahneigenschafts-Positions-Datenobjekten, mit einer Rechnereinrichtung, die derart eingerichtet ist, dass eine erfasste Fahrbahneigenschaft und die entsprechende Position in ein Fahrbahneigenschafts-Positions-Datenobjekt umgesetzt werden und dass das Fahrbahneigenschafts-Positions-Datenobjekt durch die Sendeeinrichtung gesendet wird.

### Zusammenfassung der Erfindung

Es ist eine Aufgabe, die Privatsphäre der Fahrzeugnutzer bei Weiterleitung von während der Fahrt erfassten Fahrweg-Eigenschaften an eine zentrale Datenbank zu verbessern.

Diese Aufgabe wird durch das in Anspruch 1 angegebene Verfahren gelöst. Vorteilhafte Ausgestaltungen und Weiterentwicklungen des Verfahrens sind in den abhängigen Ansprüchen angegeben.

### Begriffsklärungen

Im Kontext der vorliegenden Beschreibung bezieht sich der Begriff Fahrwegdaten auf Daten, die Eigenschaften eines Fahrwegs an einem Ort zu der Zeit der Erfassung beschreiben. Eigenschaften eines Fahrwegs umfassen u.a. eine Steigung, eine seitliche Neigung, oder eine Oberflächenbeschaffenheit einer Fahrbahn des Fahrwegs, z.B. Rauigkeit des Straßenbelags oder Spurrinnen, aber auch durch Verkehrszeichen angegebene Verkehrsbeschränkungen, Zeiten, zu denen durch Verkehrszeichen angegebene Verkehrsbeschränkungen gelten, der Standort eines Verkehrszeichens, vorübergehende oder länger anhaltende Verkehrsstörungen, z.B. durch Unfälle oder liegen gebliebene Fahrzeuge oder verlorene Ladung, eine Verkehrsdichte, und dergleichen. Ein Ort, oder Erfassungsort, zudem eine Fahrwegeigenschaft erfasst wurde kann beispielsweise eine Geo-Position sein, wie sie in Navigationssystemen verwendet wird, oder eine Position auf einer von einem Navigationssystem verwendeten Landkarte, oder dergleichen. Ein Fahrwegdatensatz ist dementsprechend ein Datensatz, der zumindest eine Fahrwegeigenschaft und den zugehörigen Ort der Erfassung zusammenfasst. Der Begriff Fahrwegdaten-Nachrichten bezieht sich auf Daten-Nachrichten, die an eine fahrzeugexterne Datenbank gesendet werden. Sie umfassen unter anderem Fahrwegdaten und einen Ort, an dem die Fahrwegdaten erfasst wurden. Der Ort der Erfassung kann auch ein Streckenabschnitt sein, der durch Geo-Positionen für einen Anfang und ein Ende bestimmt ist, oder durch eine mittlere Geo-Position und eine Ausdehnung in beide Fahrtrichtungen der Strecke. Der Ort der Erfassung kann zudem eine Fahrtrichtung auf dem Streckenabschnitt beinhalten, z.B. um eine nur für eine Fahrtrichtung vorliegende Fahrwegeigenschaft genauer zu erfassen.

Gemäß einem Aspekt des erfindungsgemäßen Verfahrens werden Fahrwegdaten und zugehörige Orte von einem fahrenden Fahrzeug erfasst, und zusammen mit einem Zeitpunkt der Erfassung in einem Speicher des Fahrzeugs gespeichert. Die Fahrwegdaten können dabei von einem oder mehreren am oder im Fahrzeug vorgesehenen Sensoren erfasst werden. Die Speicherung kann in einem gesonderten, gesicherten oder verschlüsselten Bereich des Speichers erfolgen.

Für die Erfassung von Fahrwegdaten gemäß diesem und anderen Aspekten der vorliegenden Erfindung sind im Fahrzeug Sensoren vorgesehen, die auch für andere Funktionen verwendet werden können. So können beispielsweise eine Kamera zur Verkehrszeichenerkennung oder für ein Spurhalteassistenz-System, ein Abstandsradar, ein Lidar-System für automatisiertes Fahren, ein Regensensor oder ein Temperatursensor, die ohnehin im Fahrzeug vorgesehen sind, auch für die Erfassung von Fahrwegeigenschaften verwendet werden. Der Temperatursensor würde dabei beispielsweise Fahrwegeigenschaften mit einer kürzeren zeitlichen Gültigkeit liefern, wie etwa Temperaturen nahe der Fahrwegoberfläche, die für eine Warnung vor eisglatter Straße für Abschnitte des Fahrwegs ausgewertet werden. Sensoren, die Informationen über dynamische Bewegungen der Radaufhängungen liefern, etwa für ein dynamisch geregeltes Fahrwerk, können Daten zur Beschaffenheit der Oberfläche liefern, z.B. Bodenwellen oder Spurrinnen. Auch Daten von ABS-Systemen und Antriebsschlupfregelungen können Informationen über Eigenschaften der Fahrwegoberfläche liefern, z.B. über einen Reibkoeffizienten, der je nach Witterungsbedingungen unterschiedlich sein kann. Die Witterungsbedingungen können beispielsweise durch einen Regensensor erfasst werden, oder durch die Überwachung der Betätigung eines Scheibenwischers durch einen Fahrer. Gyrosensoren oder Beschleunigungssensoren eines Fahrzeug-Stabilisierungssystems können Informationen zu Steigung oder seitlicher Neigung des Fahrwegs liefern. Spezielle Sensoren können für die Erfassung anderer Fahrwegeigenschaften zusätzlich vorgesehen sein.

Fahrwegdaten-Nachrichten, die Fahrwegdaten und einen jeweils zugehörigen Ort der Erfassung umfassen, werden an die Datenbank gesendet, nachdem das Fahrzeug einen vorbestimmten Radius um den Erfassungsort verlassen hat, d.h. eine bestimmte Distanz zwischen dem Fahrzeug und dem Erfassungsort liegt, und/oder zu einem zufällig gewählten Zeitpunkt innerhalb eines vorbestimmten Zeitintervalls nach dem Zeitpunkt der Erfassung. Das vorbestimmte Zeitintervall und/oder der vorbestimmte Radius können benutzerdefiniert sein, z.B. durch Auswahl eines von mehreren Werten eines Parameters, der unterschiedliche Abstufungen der Wahrung der Privatsphäre darstellen, durch einen Benutzer. Das vorbestimmte Zeitintervall kann unmittelbar mit oder nach der Erfassung beginnen, es ist aber auch möglich, das vorbestimmte Zeitintervall erst nach Ablauf einer Wartezeit nach der Erfassung beginnen zu lassen, oder nach dem Verlassen des vorbestimmten Radius um den Erfassungsort. Es ist auch möglich, zusätzlich zu dem vorbestimmten Radius, der eine absolute Distanz zum Erfassungsort angibt, einen anderen Radius zu bestimmen, ab dessen Verlassen das vorbestimmte Zeitintervall beginnt. Das Senden erfolgt also nicht notwendigerweise unmittelbar nach dem Verlassen des vorbestimmten Radius.

Der vorbestimmte Zeitraum kann auch in Abhängigkeit von einer seit dem Zeitpunkt der Erfassung zurückgelegten Strecke dynamisch angepasst werden, und der vorbestimmte Radius kann dynamisch in Abhängigkeit von einer Durchschnittsgeschwindigkeit um den Zeitpunkt der Erfassung angepasst werden. Der vorbestimmte Radius kann auch in Abhängigkeit von einer Mindestanzahl von Straßenverzweigungen innerhalb des Radius festgelegt werden, wodurch eine Ermittlung einer wahrscheinlichen Fahrstrecke erschwert wird.

Wenn das Fahrzeug einer mittels eines Navigationssystems geplante Route folgt können der vorbestimmte Zeitraum und/oder der Radius auch von der Länge der Route abhängig sein, und/oder von einer vor der Erfassung ermittelten Durchschnittsgeschwindigkeit.

Bei einem Aspekt des erfindungsgemäßen Verfahrens kann, wenn der vorbestimmte Radius relativ groß gewählt ist, bspw. einen größeren Teil einer Stadt umfasst, und möglicherweise nicht verlassen wird, eine Übertragung der während einer Fahrt erfassten Fahrwegdaten nach Beendigung der Fahrt erfolgen. Eine solche Situation kann bspw. vorliegen, wenn ein relativ großer Radius um einen Heimatstandort herum, von dem aus häufig oder regelmäßig Fahrten begonnen werden, selten verlassen wird. Um dennoch die Rekonstruktion einer während einer Fahrt gefahrenen Strecke zu erschweren, können nach der Beendigung der Fahrt die Fahrwegdaten-Nachrichten innerhalb eines Zeitintervalls nacheinander gesendet werden. Dabei können die einzelnen Fahrwegdaten-Nachrichten in einer zufälligen, von der zeitlichen Reihenfolge ihrer Erfassung unabhängigen Reihenfolge und auch in zufälligen Abständen voneinander gesendet werden.

Wenn die Art der Fahrwegdaten eine Rekonstruktion der Fahrtrichtung und dadurch eine Rekonstruktion einer einzelnen Fahrt ermöglichen, beispielsweise Verkehrszeichen, deren Inhalt üblicherweise nur von einer Seite aus erkannt werden kann, kann das Senden so lange verzögert werden, bis eine Mindestzahl weiterer Fahrten durchgeführt wurde. Es ist auch denkbar, dass als weitere Fahrten für das vorliegende Verfahren nur solche gelten, die zumindest in einer Teilstrecke von zuvor gefahrenen Fahrstrecken abweichen. Dabei können mehrfach erfasste Fahrwegeigenschaften, die sich über die mehreren Fahrten nicht geändert haben, nur ein einziges Mal gesendet werden. Alternativ kann vorgesehen sein, Fahrwegdaten, die eine Rekonstruktion der Fahrstrecke erleichtern, nicht zu übertragen.

Grundsätzlich kann für unterschiedliche Aspekte des vorliegenden Verfahrens, wenn mehrere Fahrwegdatensätze im Fahrzeug gespeichert sind, für die jeweilige Bedingungen zum Senden an die Datenbank erfüllt sind, eine erste Reihenfolge für das Senden der entsprechenden Fahrwegdaten-Nachrichten gewählt werden. Die erste Reihenfolge kann eine von der zeitlichen Reihenfolge der Erfassung unabhängige, zufällige Reihenfolge sein. Hierdurch kann die Ermittlung einer Fahrtrichtung, in welcher die Fahrt durchgeführt wurde, erschwert werden. Dabei können zwischen einzelnen Fahrwegdaten-Nachrichten zufällige zeitliche Abstände eingefügt werden. Es ist natürlich auch möglich, die Daten in der Reihenfolge ihrer Erfassung zu senden.

Gemäß einem Aspekt des erfindungsgemäßen Verfahrens kann eine Auswahl der an die Datenbank zu übermittelnden Fahrwegdaten derart erfolgen, dass nur Daten zu zeitlich unveränderlichen oder nur langsam veränderlichen Fahrwegeigenschaften übertragen werden, um die Ermittlung eines Fahrprofils durch eine Korrelation mit entsprechenden Daten von anderen Fahrzeugen zu erschweren.

Gemäß einem Aspekt des erfindungsgemäßen Verfahrens wird in einer Fahrwegdaten-Nachricht außerdem ein Zeitraum übertragen, innerhalb dessen die Fahrwegdaten erfasst wurden. Dadurch kann in der Datenbank eine Entscheidung getroffen werden, ob die empfangenen Daten verworfen oder gespeichert werden. Dieser Aspekt kann nützlich sein, wenn unterschiedliche Einstellungen zur Wahrung der Privatsphäre bei unterschiedlichen Fahrzeugen dazu führen, dass Fahrwegdaten zu einem Ort, welche relativ schnell veränderliche Fahrwegeigenschaften betreffen, über einen längeren Zeitraum verteilt bei der Datenbank eintreffen. Die Fahrwegdaten, die während eines früheren Zeitraums erfasst wurden, also ältere Fahrwegdaten, und die von während eines späteren Zeitraums erfassten, neueren Fahrwegdaten abweichen, können dann verworfen werden. Der Zeitraum kann so gewählt werden, dass eine Ermittlung einer Fahrstrecke erschwert wird. So kann beispielsweise der Zeitraum so gewählt sein, dass er mehrere aufeinander folgende Einzelfahrten umfasst.

Gemäß einem Aspekt des erfindungsgemäßen Verfahrens sind der vorbestimmte Radius und/oder das vorbestimmte Zeitintervall von der Dringlichkeit der Übermittlung der Daten abhängig. So können für Daten, die Fahrwegeigenschaften betreffen, deren schnelle Übermittlung und Weiterverbreitung für andere Verkehrsteilnehmer von Nutzen sein kann, z.B. Glätte, liegengebliebene Fahrzeuge, Staus, und dergleichen, kleinere Radien und kürzere Zeitintervalle verwendet werden, als für Daten, die im Wesentlichen unveränderliche oder nur langsam veränderliche Fahrwegeigenschaften betreffen, wie z.B. Spurrinnen, Schlaglöcher, Baustellen und dergleichen. In der Regel betreffen solche Fahrwegdaten beide Fahrtrichtungen einer Strecke oder sind von einer Fahrtrichtung unabhängig erfassbar, so dass hierdurch keine Fahrtrichtung rekonstruierbar ist.

Gemäß einem Aspekt des erfindungsgemäßen Verfahrens können über einen Streckenabschnitt im Wesentlichen unverändert bleibende Fahrwegeigenschaften als Mittelwert für den Abschnitt übermittelt werden. Entsprechend werden der Anfang und das Ende des Abschnitts anstelle eines einzelnen Erfassungsorts übertragen. Der Mittelpunkt des Radius für die Verzögerung der Übertragung kann dabei innerhalb des Abschnitts zufällig gewählt werden. Es ist aber auch möglich, den Radius in Fahrtrichtung gesehen an das Ende des Abschnitts zu legen. Anfang und Ende des Abschnitts können durch die im Wesentlichen unveränderte Eigenschaft bestimmt sein. Es ist aber auch möglich, einen längeren Abschnitt mit im Wesentlichen unveränderten Fahrwegeigenschaften in Unterabschnitte zu unterteilen, für die jeweils eine eigene Fahrwegdaten-Nachricht übertragen wird. Diese Nachrichten können dann wieder gemäß einem oder mehreren der weiter oben beschriebenen Aspekte in zeitlich von der Erfassung unabhängiger Reihenfolge und ggf. in zufälligen Abständen an die Datenbank übertragen werden.

Gemäß einem Aspekt des erfindungsgemäßen Verfahrens werden die Daten in einem Nutzdatenbereich einer Nachricht übertragen, die außerdem noch einen Headerbereich aufweist. In der Nachricht kann eine Signatur des sendenden Fahrzeugs enthalten sein. Die Signatur kann spezifisch für einen Fahrzeughersteller sein, oder für eine Fahrzeugserie eines Herstellers, aber auch für ein einzelnes Fahrzeug. Dadurch ist es z.B. möglich, eine Qualitätsunterscheidung der Daten vorzunehmen, z.B. wenn unterschiedliche Sensoren mit unterschiedlicher Genauigkeit in Fahrzeugen oder Fahrzeugserien unterschiedlicher Hersteller zur Erfassung der Fahrwegeigenschaften verwendet werden.

Die Signatur kann beim Empfang in der Datenbank überprüft werden. Wenn eine Signatur wiederholt mit fehlerhaften Daten in Verbindung gebracht wird, können weitere Daten mit dieser Signatur schon beim Empfang verworfen werden. Wenn die Signatur in dem Headerbereich übertragen wird und von Zwischenempfängern durch deren jeweilige eigene Signatur ersetzt wird geht diese Möglichkeit verloren. Hier kann zumindest teilweise Abhilfe geschaffen werden, wenn eine weitere Signatur in den Nutzdatenteil der Nachricht eingefügt wird, die keine eindeutige Identifikation eines einzelnen Fahrzeugs ermöglicht, z.B. eine allen Fahrzeugen einer Baureihe eines Herstellers gemeinsame Signatur. Bei einem baureihenspezifischen Sensorproblem können die entsprechenden Nachrichten leichter gefiltert werden.

Gemäß einem Aspekt des erfindungsgemäßen Verfahrens werden die Daten im Nutzdatenbereich der Nachricht mit einem öffentlichen Schlüssel der Datenbank verschlüsselt, so dass sie nur in der Datenbank mit dem entsprechenden privaten Schlüssel entschlüsselt werden können. Hierdurch kann ein unbefugter Zugriff auf die Daten während der Übertragung, die ja zumindest teilweise über eine Drahtlose Übertragungsstrecke erfolgt, erschwert werden. Es ist auch möglich, Daten je nach Fahrzeughersteller zu verschlüsseln, so dass nur der Hersteller des Fahrzeugs, das die Daten ursprünglich erfasst hat, in der Lage ist, die Daten zu entschlüsseln. Hierdurch wird datenbankseitig eine Dienste-Differenzierung zwischen unterschiedlichen Herstellern ermöglicht. Die Weiterleitung der Fahrwegdaten-Nachrichten kann dabei unabhängig vom Hersteller von allen dazu eingerichteten Fahrzeugen durchgeführt werden.

Gemäß einem Aspekt des erfindungsgemäßen Verfahrens werden Daten nicht direkt an die Datenbank gesendet, sondern müssen über eine vorbestimmte Mindestanzahl anderer Fahrzeuge weitergeleitet werden, bevor sie an die Datenbank gesendet werden. Zwischen zwei Fahrzeugen können die Daten mittels Fahrzeug-zu-Fahrzeug-Kommunikation (F2F), auch als Vehicle-to-Vehicle-Communication (V2V) oder Car-to-Car-Communication (C2C) bekannt, übertragen werden. Jeder Zwischenempfänger gibt sich dabei gegenüber dem Empfänger der von ihm übertragenen Fahrwegdaten-Nachricht als Ursprung der Daten aus.

Dabei kann es sinnvoll sein, bspw. um den Datenverkehr zu begrenzen, aber auch um eine Häufung von identischen Fahrwegdaten in der Datenbank zu vermeiden, die von einem Fahrzeug erfasst wurden, aber von unterschiedlichen Fahrzeugen gesendet wurden, dass erfasste Fahrwegdaten nur ein einziges Mal von dem erfassenden Fahrzeug gesendet werden. Zweckmäßigerweise wird bei der Übertragung der korrekte Empfang verifiziert, bspw. mittels bekannter Verfahren zur Vorwärtsfehlerkorrektur, und quittiert. Nach Erhalt einer Empfangsquittierung können die Daten nicht erneut gesendet werden, und können gelöscht werden, wenn sie nicht für andere Zwecke im Fahrzeug gespeichert bleiben müssen.

Im Headerteil der Nachricht kann ein Flag vorgesehen sein, welches die Nachricht als Original kennzeichnet, welches nicht direkt an die Datenbank übertragen werden kann. Ein als Zwischenempfänger agierendes Fahrzeug kann das Flag nach dem Empfang oder vor der Weiterleitung löschen, und kann die Nachricht dann an die Datenbank senden. Anstelle des Flags kann auch ein Zählwert im Headerteil der Nachricht vorgesehen sein, der von dem Fahrzeug, das die Daten erfasst hat, auf einen Wert gesetzt wird, und von jedem Zwischenempfänger um eins heruntergesetzt wird. Solange der Zählwert einer Nachricht nicht null ist, kann diese Nachricht nicht direkt an die Datenbank gesendet werden. Der Zählwert gibt demnach an, wie oft eine Nachricht weitergeleitet werden muss, bevor sie an die Datenbank gesendet werden darf.

Dieser Aspekt des erfindungsgemäßen Verfahrens stellt sicher, insbesondere wenn das erste Senden der Nachricht gemäß einem oder mehreren anderen Aspekten des erfindungsgemäßen Verfahrens verzögert wurde, dass aus dem Empfang einer Nachricht von einem Fahrzeug nicht darauf geschlossen werden kann, dass dieses Fahrzeug sich auch an dem Erfassungsort der Fahrwegdaten befunden hat. Wenn nur ein Zwischenempfänger vorgesehen ist kann lediglich geschlossen werden, dass sich das Fahrzeug, das die Daten erfasst hat, und das Fahrzeug, das die Daten an die Datenbank gesendet hat, an irgendeinem Ort begegnet sind. Wenn mehrere Zwischenempfänger vorgesehen sind, ist nicht einmal dieser Rückschluss möglich. Es ist aber grundsätzlich möglich, erfasste Fahrwegdaten unmittelbar nach der Erfassung an einen Zwischenempfänger zu senden.

Der von dem Fahrzeug, das die Daten erfasst hat, vorgegebene Zählwert kann von einem Benutzer einstellbar sein, entweder direkt oder über eine allgemeine 'Privatsphäreneinstellung', die auch andere Daten und/oder Übertragungen beeinflusst. Der Zählwert kann auch zufällig oder automatisch nach Verkehrsdichte und nach Dringlichkeit der Weiterleitung an zentralen Server gewählt werden. Bei hoher Verkehrsdichte sind mehr potentielle Zwischenempfänger vorhanden, so dass ein höherer Zählwert eingestellt werden kann, ohne die Verzögerung zwischen der Erfassung der Daten und dem Empfang der Daten in der Datenbank signifikant zu erhöhen. Anstelle eines Zählwerts kann grundsätzlich auch eine absolute früheste und/oder späteste Sendezeit zur Weiterleitung an die Datenbank angegeben werden. Wenn Daten vorliegen, die eine hohe Dringlichkeit aufweisen, also möglichst schnell an die Datenbank übertragen werden müssen, kann der Zählwert automatisch verringert werden.

Gemäß einem Aspekt des erfindungsgemäßen Verfahrens wird immer nur ein Datensatz an denselben Zwischenempfänger gesendet. Wenn sich mehrere Datensätze in dem Speicher des Fahrzeugs befinden, das die Daten erfasst hat, also der ursprünglichen Quelle, und für mehrere Datensätze die Bedingungen zum Senden erfüllt sind, kann darüber hinaus der zu sendende Datensatz zufällig ausgewählt werden, wenn eine Sendereihenfolge nicht aufgrund einer Dringlichkeits-Sortierung oder aus anderen Gründen vorgegeben ist. Mit anderen Worten kann ein Zwischenempfänger immer nur einen Satz Daten von einem bestimmten Fahrzeug empfangen, aber mehrere Sätze von Daten von mehreren Fahrzeugen. Ein Fahrzeug, das einmal als Zwischenempfänger für ein anderes Fahrzeug gedient hat, kann dann vor Ablauf einer Wartezeit oder innerhalb eines Radius um den Ort des Empfangs der ersten Nachricht nicht erneut als Zwischenempfänger für Nachrichten von diesem Fahrzeug dienen. Die Wartezeit kann von einem Benutzer einstellbar sein, oder von der Dringlichkeit der Übermittlung der Nachricht abhängen. Da sich die Fahrzeuge beim Verbindungsaufbau identifizieren, kann eine Übertragung mehrerer Nachrichten mit Fahrwegeigenschaften an dasselbe Fahrzeug innerhalb der Sperrzeit auf einfache Weise verhindert werden.

Der vorstehende Aspekt kann auch implementiert werden, indem eine Übertragung nur an Fahrzeuge erfolgt, die in eine andere Richtung fahren als das sendende Fahrzeug. Die Fahrtrichtung kann beim Verbindungsaufbau übertragen werden, beispielsweise als ein eine Kompassweisung repräsentierender Zahlenwert oder als Angabe einer Himmelsrichtung. Bei Sichtkontakt zwischen Fahrzeugen, z.B. innerhalb von Ortschaften, kann auch eine Erkennung entgegenkommender, vorausfahrender oder abbiegender Fahrzeuge mittels einer Kamera und entsprechender Bilderkennungssoftware erfolgen. Eine solche Ausstattung kann ohnehin vorgesehen sein, um beispielsweise anhand eines Zulassungskennzeichens Daten für einen Verbindungsaufbau zu ermitteln. Mit dieser Implementierung kann effektiv vermieden werden, dass Nachrichten an ein über eine längere Zeit dieselbe Route fahrendes Fahrzeug übertragen werden.

Wenn im Headerteil der Nachricht eine Signatur des sendenden Fahrzeugs übertragen wird ersetzt das empfangende Fahrzeug die Signatur durch seine eigene Signatur, und leitet die Nachricht gemäß der in der Nachricht enthaltenen Einstellungen über die vorbestimmte Mindestanzahl an Zwischenempfängern an den nächsten Zwischenempfänger oder an die Datenbank weiter. Dadurch ist sichergestellt, dass die Signatur des Senders, der die Nachricht an die zentrale Datenbank weitergibt, nur mit sehr geringer statistischer Wahrscheinlichkeit mit der Signatur der tatsächlichen Quelle übereinstimmt. Die Signatur des Fahrzeugs kann beispielsweise bei der Auslieferung oder Zulassung des Fahrzeugs einprogrammiert werden. Es kann auch die Signatur des Fahrzeugs verwendet werden, die für ein On-Board- oder Online-Serviceheft verwendet wird.

Gemäß einem Aspekt des erfindungsgemäßen Verfahrens wird die Signatur vom Empfänger verifiziert, ohne dass der Inhalt der Nachricht geöffnet wird. Eine Weiterleitung der Nachricht erfolgt dann nur, wenn die Signatur erfolgreich verifiziert wurde. Über aus der Pay-TV-Technik bekannte Verfahren können Signaturen, die als unzuverlässige Datenquellen erkannt wurden, gesperrt werden. Eine Liste mit gesperrten Signaturen kann bspw. mittels drahtloser Übermittlung an die Fahrzeuge übermittelt und aktuell gehalten werden. Hierbei kann eine regionale Auswahl von Signaturen vorgesehen sein, die an andere Fahrzeuge übermittelt wird, wodurch die die Anzahl der zu übertragenden zu sperrenden Signaturen reduziert werden kann. Insbesondere Signaturen, die häufig mit eine bestimmte Region betreffenden, falschen oder unzuverlässigen Fahrwegdaten-Nachrichten in Verbindung gebracht werden, können so effektiv gesperrt werden.

Zur Datenübertragung zwischen zwei Fahrzeugen kann eine ad-hoc point-to-point-Verbindung verwendet werden, beispielsweise nach dem IEEE 802.11 P Standard. Die Weiterleitung an die fahrzeugexterne Datenbank kann über bekannte drahtlose Verbindungen, bspw. nach dem GSM (Global System for Mobile Communications), UMTS (Universal Mobile Telecommunications System), LTE (Long Term Evolution), oder andere geeignete Verbindungen erfolgen.

Wenn zusätzlich zur Verschlüsselung des Nutzdatenbereichs der Nachricht eine Verschlüsselung des Headers vorgesehen ist kann diese gemäß dem bekannten "public-private-key"-Verfahren mit einem öffentlichen Schlüssel des Zwischenempfängers erfolgen. Der Zwischenempfänger entschlüsselt den Header mit seinem privaten Schlüssel und verarbeitet bzw. leitet die Nachricht erfindungsgemäß weiter. Eine Verschlüsselung auch des Headers kann das Mithören durch Dritte weiter erschweren.

Wenn mehrere Zwischenempfänger eine Fahrwegdaten-Nachricht weiterleiten, bevor sie an die Datenbank gesendet wird, kann die Anzahl der Zwischenempfänger oder "Hops" zur Ermittlung eines Vertrauenswerts oder Trust-Values in der Datenbank dienen. Dabei wird zugrundegelegt, dass eine größere Anzahl Hops einer entsprechend größeren Wahrscheinlichkeit entspricht, dass die Nachricht auf ihrem Weg von der Datenerfassung zur Datenbank verändert worden sein könnte. Hieraus resultiert ein geringerer Vertrauenswert. Zudem ist eine Nachricht nach einer größeren Anzahl von Hops wahrscheinlich auch nicht mehr sehr aktuell. Je nach Nachrichteninhalt kann die Anzahl der Hops also die Weiterverarbeitung in der Datenbank beeinflussen.

Es ist leicht ersichtlich, dass Merkmale der vorstehend beschriebenen unterschiedlichen Aspekte des erfindungsgemäßen Verfahrens kombiniert werden können. Z.B. kann vorgesehen sein, Fahrwegdaten-Nachrichten erst nach Ablauf einer Wartezeit nach der Erfassung und/oder nach Verlassen eines Radius um den Erfassungsort an einen Zwischenempfänger weiter zu leiten. Es ist grundsätzlich aber möglich, Fahrwegdaten-Nachrichten unmittelbar nach der Erfassung der Fahrwegdaten an einen Zwischenempfänger zu übertragen. In diesem Fall ist der vorbestimmte Radius null bzw. das Zeitintervall hat eine so kurze Zeitdauer, dass der zufällig gewählte Zeitpunkt in dem Zeitintervall einem sofortigen Senden entspricht. Auch die unterschiedlichen Varianten der Verschlüsselung können sowohl bei der direkten Übermittlung der Fahrwegdaten-Nachrichten an die Datenbank oder bei der Übermittlung über Zwischenempfänger zum Einsatz kommen.

Eine zur Durchführung eines oder mehrerer Aspekte des erfindungsgemäßen Verfahrens eingerichtete Vorrichtung umfasst ein oder mehrere Sensoren zur Erfassung der Fahrwegeigenschaften, eine Vorrichtung zur Bestimmung eines Erfassungsort, z.B. ein satellitengestütztes und/oder kartenbasiertes Navigationssystem, und ein oder mehrere Kommunikationsschnittstellen zur drahtlosen Kommunikation mit fahrzeugexternen Sendern und Empfängern, die mit einem Steuergerät kommunikativ verbunden sind. Das Steuergerät umfasst ein oder mehrere Mikroprozessoren, der oder die lesend bzw. schreibend auf flüchtigen und nichtflüchtigen Speicher zugreifen. Der nichtflüchtige Speicher enthält Programminstruktionen die, wenn sie von dem einen oder mehreren Mikroprozessoren in dem flüchtigen Speicher ausgeführt werden, Verfahrensschritte zur Steuerung der ein oder mehreren Sensoren, der Vorrichtung zur Bestimmung des Erfassungsorts sowie der Kommunikationsschnittstellen gemäß einem oder mehreren Aspekten des erfindungsgemäßen Verfahrens ausführen.

Durch die Verzögerung der Übertragung wird eine Erstellung eines genauen Fahrprofils erschwert, und es kann aus der letzten Übertragung nicht auf einen genauen gegenwärtigen Standort des Fahrzeugs geschlossen werden. Es kann lediglich sicher festgestellt werden, dass sich das Fahrzeug zu irgendeinem Zeitpunkt innerhalb eines einem Dritten unbekannten Zeitintervalls an dem Erfassungsort befunden hat. Dies gilt insbesondere für Daten, die von einer Fahrtrichtung unabhängig sind, also beispielsweise Temperatur und Niederschlag, aber auch eine Steigung bzw. ein Gefälle einer Straße. Bei Fahrwegeigenschaften, die eine Rekonstruktion einer Fahrtrichtung erleichtern, wird diese gemäß anderer der vorstehend beschriebenen Aspekte erschwert, z.B. durch eine längere Verzögerung, die eine Wahrscheinlichkeit mehrerer Fahrten innerhalb des Verzögerungszeitraums erhöht, oder durch eine Übermittlung an die Datenbank erst nachdem mehrere Fahrten durchgeführt wurden. Die Loslösung von Fahrwegdaten vom erfassenden Fahrzeug durch Übermittlung über ein oder mehrere andere, als Nachrichtenübermittler fungierende Fahrzeuge bewirkt eine weitere Erschwerung der Erstellung eines Fahrprofils für ein Fahrzeug. In diesem Fall kann nicht einmal sicher festgestellt werden, dass das sendende Fahrzeug tatsächlich einmal am oder in der Nähe des Erfassungsorts war.

### Kurze Beschreibung der Zeichnungen

Im Folgenden werden Aspekte der Erfindung mit Bezug auf die Zeichnung beschrieben. In der Zeichnung zeigt
- Fig. 1: ein schematisches Beispiel eines ersten Aspekts des erfindungsgemäßen Verfahrens;
- Fig. 2: eine schematische Darstellung eines zweiten Aspekts des erfindungsgemäßen Verfahrens;
- Fig. 3: eine schematische Darstellung eines dritten Aspekts des erfindungsgemäßen Verfahrens;
- Fig. 4: eine schematische Darstellung eines vierten Aspekts des erfindungsgemäßen Verfahrens;
- Fig. 5: einen schematischen Ablauf der Übertragung von Nachrichten mit Fahrwegeigenschaften gemäß dem vierten Aspekt des erfindungsgemäßen Verfahrens;
- Fig. 6: ein beispielhaftes schematisches Flussdiagramm eines Aspekts des erfindungsgemäßen Verfahrens; und
- Fig. 7: einen exemplarischen Aufbau einer Fahrwegda-ten-Nachricht gemäß einem oder mehreren Aspekten des erfindungsgemäßen Verfahrens.

### Beschreibung der Ausführungsbeispiele

In den Figuren der Zeichnung sind gleiche oder ähnliche Elemente mit den gleichen Bezugszeichen bezeichnet.

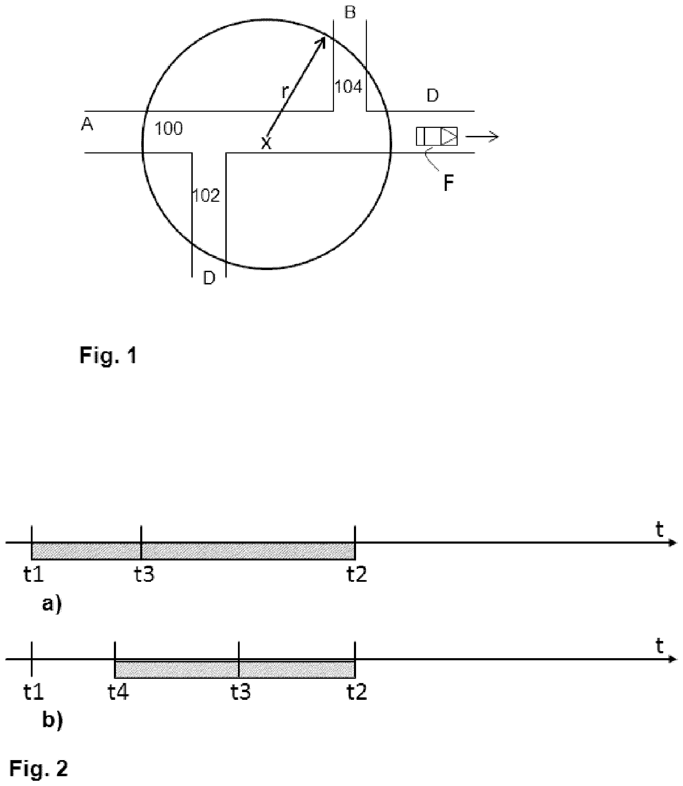

Figur 1 zeigt ein schematisches Beispiel eines ersten Aspekts des erfindungsgemäßen Verfahrens. Die Figur zeigt eine Straße 100 mit einer ersten und einer zweiten Abzweigung, 102 und 104. Ein Fahrzeug F fährt auf der Straße 100 von links kommend nach rechts, angezeigt durch den Pfeil vor dem Fahrzeug F. An der Position x erfasst das Fahrzeug eine Eigenschaft des Fahrwegs, also der Fahrbahn auf der Straße 100, auf der das Fahrzeug F fährt. Erfindungsgemäß werden die Fahrwegeigenschaft und der Ort der Erfassung nicht sofort in einer Fahrweg-Nachricht an eine in der Figur nicht gezeigte Datenbank gesendet. Vielmehr stellt der Ort x der Erfassung einen Mittelpunkt für einen Radius r, den das Fahrzeug F zuerst verlassen muss, bevor die Fahrweg-Nachricht gesendet werden kann. Die Übertragung erfolgt also an irgendeiner Position außerhalb des Radius r. In dem Beispiel aus Figur 1 kann aus der Fahrweg-Nachricht nicht geschlossen werden, wo sich das Fahrzeug F derzeit befindet, weil der Radius r so gewählt wurde, dass er abzweigende Straßen umfasst. Setzt man eine Übertragung kurz nach dem Verlassen des Radius r voraus, könnte sich das Fahrzeug F zum Zeitpunkt der Übertragung auf vier unterschiedlichen Positionen A, B, C, D befinden.

Figur 2 zeigt eine schematische Darstellung eines zweiten Aspekts des erfindungsgemäßen Verfahrens, bei dem eine Übertragung an eine Datenbank nicht von einer Distanz zum Erfassungsort abhängt, sondern von einer seit der Erfassung verstrichenen Zeit. In Figur 2 a) wird zum Zeitpunkt t1 eine Fahrwegeigenschaft erfasst. Der Zeitpunkt t1 markiert zugleich den Anfang eines sich bis zum Zeitpunkt t2 erstreckenden Zeitintervalls, innerhalb dessen zu einem zufällig ausgewählten Zeitpunkt t3 die Übertragung erfolgt. Die Auswahl des Zeitpunkts t3 für die Übertragung kann auch von weiteren Parametern abhängig gemacht werden, beispielsweise von einer Fahrgeschwindigkeit, von einer Anzahl von erfassten Fahrwegeigenschaften für einen Abschnitt einer Fahrstrecke oder für einen Zeitraum, oder dergleichen. In Figur 2 b) beginnt das bis zum Zeitpunkt t2 laufende Zeitintervall, innerhalb dessen die Übertragung erfolgt, nicht unmittelbar mit der Erfassung der Fahrwegeigenschaft zum Zeitpunkt t1, sondern zu einem späteren Zeitpunkt t4. Der Zeitpunkt t4 kann einen festgelegten zeitlichen Abstand zum Zeitpunkt t1 haben. Wie grundsätzlich für andere Aspekte des erfindungsgemäßen Verfahrens auch kann der Abstand auch von weiteren Parametern abhängig sein, z.B. von dem Erreichen einer Distanz zum Erfassungsort, von einer Straßendichte innerhalb eines Radius um den Erfassungsort, von einer durchschnittlichen Fahrgeschwindigkeit vor und/oder nach der Erfassung, oder dergleichen. Die Feststellung der Straßendichte kann einfach über eine Kombination aus Positionsbestimmung und Abgleich mit einer Karte erfolgen, die anzeigt, ob sich das Fahrzeug innerhalb oder außerhalb einer Ortschaft befindet. Es ist auch möglich, den Zeitraum zur Übertragung nach Erfüllung einer der Distanz- oder Zeitbedingung beginnen zu lassen, je nachdem, welche Bedingung zuerst erfüllt ist. Alternativ kann der Zeitraum mit der Erfassung beginnen, aber die Übertragung erfolgt erst, wenn der Radius um den Erfassungsort verlassen wurde, oder, wenn der Radius nicht rechtzeitig verlassen wurde, am Ende des Zeitraums. Wie zuvor mit Bezug auf Figur 2 a) beschrieben erfolgt die Übertragung zu einem innerhalb des Zeitintervalls t4-t2 zufällig oder nach einer Regel ausgewählten Zeitpunkt t3.

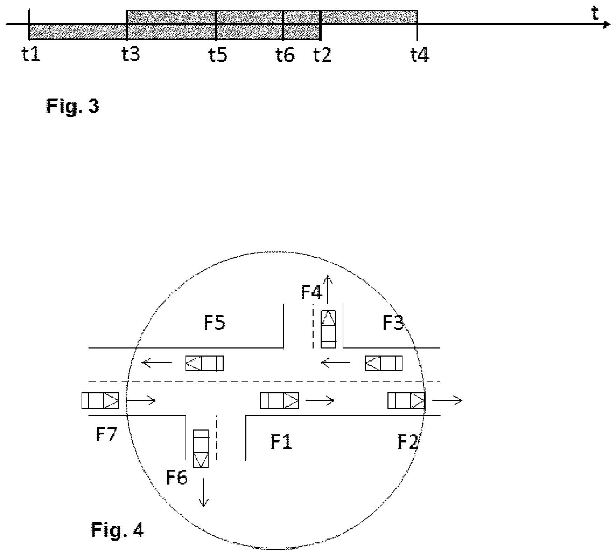

Figur 3 zeigt eine schematische Darstellung eines dritten Aspekts des erfindungsgemäßen Verfahrens, der zur Anwendung kommen kann, wenn mehrere Fahrwegeigenschaften kurz aufeinander folgend erfasst wurden. Zum Zeitpunkt t1 wird eine erste Fahrwegeigenschaft erfasst. Der Zeitpunkt t1 markiert zugleich den Anfang eines Zeitintervalls t1-t2, innerhalb dessen die erste Fahrwegeigenschaft an die Datenbank übertragen wird. Zum Zeitpunkt t3 wird eine zweite Fahrwegeigenschaft erfasst. Der Zeitpunkt t3 markiert zugleich den Anfang eines Zeitintervalls t3-t4, innerhalb dessen die zweite Fahrwegeigenschaft an die Datenbank übertragen wird. Da die Auswahl des Zeitpunkts der Übertragung der Fahrwegeigenschaft an die Datenbank zufällig erfolgt, kann die Übertragung der zweiten Fahrwegeigenschaft vor der Übertragung der ersten Fahrwegeigenschaft erfolgen. In diesem Beispiel wird die zweite Fahrwegeigenschaft zum Zeitpunkt t5 übertragen, und die erste Fahrwegeigenschaft zum Zeitpunkt t6. Dieses Beispiel zeigt demnach auch die von der Erfassungsreihenfolge unabhängige Reihenfolge des Übertragens an die Datenbank. Die von der zeitlichen Reihenfolge der Erfassungen unabhängige Reihenfolge der Übertragungen kann, abhängig von der Art der Fahrwegeigenschaften und der Anzahl von Übertragungen, die Rekonstruktion einer Fahrtrichtung für eine einzelne Fahrt zumindest erschweren.

Figur 4 zeigt eine schematische Darstellung eines vierten Aspekts des erfindungsgemäßen Verfahrens. Bei diesem Aspekt erfolgt eine Übertragung an die Datenbank nicht direkt von dem Fahrzeug, das die Fahrwegeigenschaft erfasst hat, sondern über einen oder mehrere Zwischenempfänger. Mehrere Fahrzeuge F1 - F7 fahren auf einer ersten Straße 100 bzw. auf von der ersten Straße 100 abzweigenden Straßen 102 und 104. Das erste Fahrzeug F1 hat an seiner gegenwärtigen Position eine Fahrwegeigenschaft erfasst. Da eine direkte Übertragung an die Datenbank erfindungsgemäß ausgeschlossen ist, muss eine Nachricht mit den Fahrwegeigenschaften zunächst an ein in Kommunikationsreichweite befindliches anderes Fahrzeug gesendet werden. In dem in der Figur gezeigten Beispiel sind die Fahrzeuge F2 bis F6 in Kommunikationsreichweite von Fahrzeug F1, angedeutet durch den um das Fahrzeug F1 zentrierten Kreis.

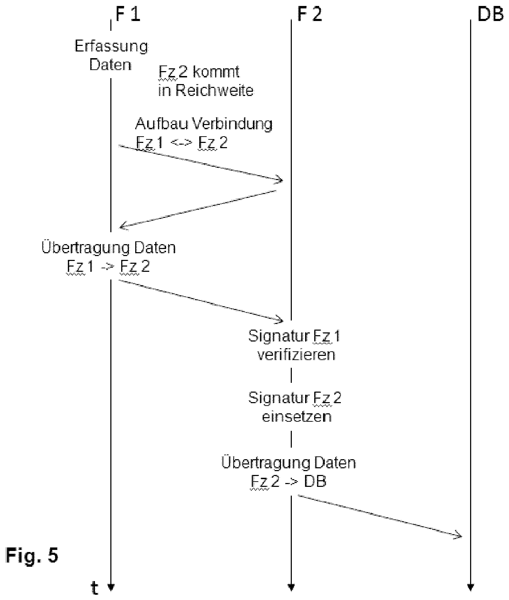

Figur 5 zeigt einen schematischen Ablauf der Übertragung von Nachrichten mit Fahrwegeigenschaften gemäß dem bereits mit Bezug auf Figur 4 vorgestellten vierten Aspekt des erfindungsgemäßen Verfahrens. Ein erstes Fahrzeug F1 erfasst Fahrwegdaten, und speichert sie in einem Fahrzeuginternen Speicher. Zu einem späteren Zeitpunkt kommt ein zweites Fahrzeug F2 in Kommunikationsreichweite des ersten Fahrzeugs F1. Wenn ggf. einzuhaltende Bedingungen für das Senden der Daten erfüllt sind, also beispielsweise ein Radius um den Erfassungsort verlassen wurde, oder besonders dringend zu übermittelnde Daten vorliegen, initiiert das erste Fahrzeug F1 einen Verbindungsaufbau mit dem zweiten Fahrzeug F2, indem es eine Verbindungsanfrage sendet. Wenn die Verbindungsanfrage von dem zweiten Fahrzeug positiv beantwortet wird, können weitere Schritte zur Vorbereitung der Übertragung der Daten nachfolgen. Bei dem Verbindungsaufbau können neben für den Aufbau eines Übertragungskanals notwendigen Informationen bereits weitere Informationen übertragen werden, anhand derer entschieden wird, ob Fahrwegdaten an das zweite Fahrzeug übertragen werden dürfen. So kann beispielsweise eine Fahrtrichtung des zweiten Fahrzeugs F2 berücksichtigt werden, oder ob das zweite Fahrzeug bereits als Zwischenempfänger für eine Übertragung des ersten Fahrzeugs gedient hat, und eine dadurch bedingte Wartezeit noch nicht abgelaufen ist. Wenn Fahrwegdaten an das zweite Fahrzeug übertragen werden können, sendet das erste Fahrzeug diese mit seiner Signatur. Das zweite Fahrzeug verifiziert die Signatur und ersetzt sie, bei positivem Ergebnis der Verifikation, mit seiner eigenen Signatur. Danach überträgt das zweite Fahrzeug die Fahrwegdaten an die Datenbank oder an einen weiteren Zwischenempfänger, ggf. nachdem weitere vor der Übertragung an die Datenbank zu berücksichtigende Bedingungen erfüllt sind.

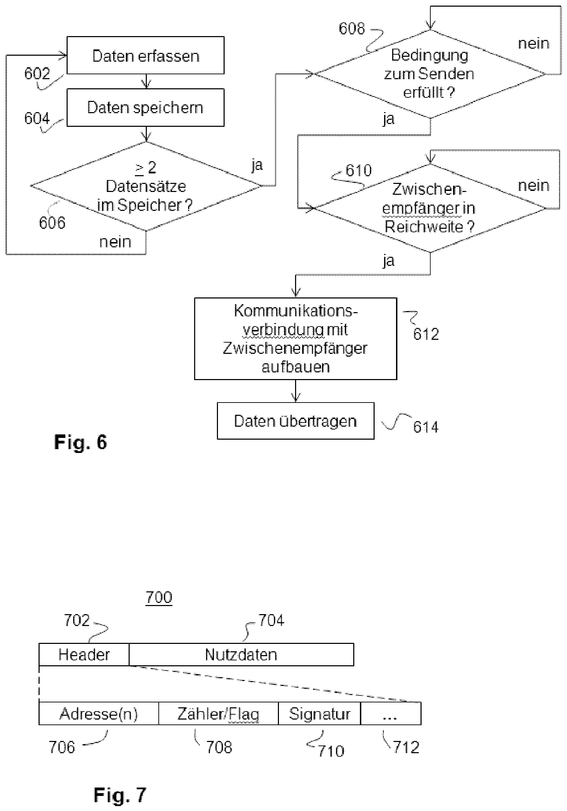

Figur 6 zeigt ein beispielhaftes schematisches Flussdiagramm eines Aspekts des erfindungsgemäßen Verfahrens. In Schritt 602 erfasst ein in der Figur nicht dargestelltes Fahrzeug Fahrwegdaten, und speichert sie in einem fahrzeuginternen Speicher in Schritt 604. In Schritt 606 wird geprüft, ob mehr als zwei Datensätze im fahrzeuginternen Speicher vorhanden sind. Falls nicht, "nein"-Zweig von Schritt 606, werden weitere Daten erfasst und gespeichert. Falls ja, "ja"-Zweig von Schritt 606, wird in Schritt 608 geprüft, ob weitere vor Bedingungen erfüllt sind, die für das Senden notwendig sind. Falls nicht, "nein"-Zweig von Schritt 608, wird das Senden verzögert, bis die Bedingungen erfüllt sind. Sind die Bedingungen erfüllt, "ja"-Zweig von Schritt 608, wird in Schritt 610 geprüft, ob ein Zwischenempfänger in Kommunikationsreichweite ist. Die Prüfung erfolgt so lange, bis ein Zwischenempfänger in Kommunikationsreichweite ist. Wenn ein anderes Fahrzeug in Kommunikationsreichweite ist, das als Zwischenempfänger dienen kann, "ja"-Zweig von Schritt 610, wird in Schritt 612 eine Kommunikationsverbindung aufgebaut, und in Schritt 614 erfolgt die Übertragung der Daten. Es sei darauf hingewiesen, dass das in Figur 6 gezeigte Flussdiagramm den Ablauf des Verfahrens nur beispielhaft wiedergibt. Bestimmte Teile des Verfahrens können parallel ablaufen, und auch von einem im Flussdiagramm nachfolgenden Schritt erneut aufgerufen werden. So können beispielsweise neue Daten erfasst und gespeichert werden, während in einem anderen Teilbereich des Verfahrens geprüft wird, ob notwendige Bedingungen zum Übertragen erfüllt sind, und das Vorliegen der Bedingungen für eine Übertragung kann erneut überprüft werden, wenn sich ein Zwischenempfänger in Kommunikationsreichweite befindet.

Figur 7 zeigt einen exemplarischen Aufbau einer Fahrwegdaten-Nachricht 700 zur Verwendung einem oder mehreren Aspekten des erfindungsgemäßen Verfahrens. Die Fahrwegdaten-Nachricht ist in einen Header-Bereich 702 und einen Nutzdaten-Bereich 704 aufgeteilt. Der Header-Bereich ist weiter unterteilt in einen Adress-Bereich 706, einen Zähler-Bereich 708 und einen Signatur-Bereich 710. Ein oder mehrere weitere Bereiche 712 für weitere Daten, deren Anordnung im Header-Bereich 702 vorteilhaft ist, können zusätzlich vorgesehen sein. Im Adress-Bereich 706 können Ursprungs- und/oder Zieladresse des Datenpakets übertragen werden. Außerdem kann eine Adresse des Zwischenempfängers an dieser Stelle übertragen werden. Einige der Adressen, insbesondere solche, die eine eindeutige Verknüpfung der Nachricht mit einem Fahrzeug, welches die Nutzdaten der Nachricht erfasst hat ermöglichen, können durch den Zwischenempfänger geändert werden. Der Zähler-Bereich 708 kann einen Zählwert übertragen der angibt, über wie viele Zwischenempfänger die Nachricht noch gesendet werden muss, bis sie an die Datenbank gesendet werden kann, und/oder einen absoluten Zeitpunkt, nach Erreichen dessen die Nachricht an die Datenbank gesendet werden kann. Der Signatur-Bereich 710 enthält eine Signatur des Senders, die vom Empfänger vor der Weiterleitung der Nachricht überprüft wird. Zur Überprüfung kann auch die Adresse des Senders herangezogen werden. Bei erfolgreicher Überprüfung und positivem Ergebnis ersetzt der Zwischenempfänger die Signatur und ggf. die Absender-Adresse durch seine eigene Signatur und Adresse, bevor die Nachricht weitergeleitet wird. Die Anordnung der Adressen, des Zählers und der Signatur im Header-Bereich 702 der Fahrwegdaten-Nachricht ermöglicht eine Verschlüsselung der Nutzdaten mit einem öffentlichen Schlüssel der Datenbank, so dass der eigentliche Inhalt der Fahrwegdaten-Nachricht erst nach dem Empfang in der Datenbank entschlüsselt werden kann. Dies erlaubt eine Differenzierung der Fahrwegdaten, z.B. nach Hersteller des Fahrzeugs, das die Daten erfasst hat. So kann beispielsweise ein Fahrzeug eines Herstellers die Daten mit einem öffentlichen Schlüssel einer bestimmten Datenbank verschlüsseln, die Dienste nur für Fahrzeuge dieses Herstellers anbietet, und die Daten können dennoch über Fahrzeuge beliebiger anderer Hersteller als Zwischenempfänger an die Datenbank übertragen werden.

## Patentansprüche

1. Verfahren zur Übertragung von durch ein fahrendes Fahrzeug erfassten Fahrwegdaten an eine vom Fahrzeug getrennt angeordnete Datenbank, umfassend:
- Erfassen mindestens einer ersten Anzahl Fahrwegdatensätze, wobei ein Fahrwegdatensatz Fahrwegdaten sowie einen Ort und einen Zeitpunkt der Erfassung umfasst, und Speichern der erfassten Fahrwegdatensätze in einem Speicher des Fahrzeugs; und
- Senden von Fahrwegdaten-Nachrichten an die Datenbank, wenn mindestens die erste Anzahl Fahrwegdatensätze im Speicher vorliegt, wobei eine Fahrwegdaten-Nachricht Fahrwegdaten und einen zugehörigen Ort der Erfassung umfasst, wobei eine Fahrwegdaten-Nachricht zu einem innerhalb eines ersten Zeitintervalls nach der Erfassung der Fahrwegdaten zufällig ausgewählten Zeitpunkt gesendet wird und/oder wenn das Fahrzeug einen vorbestimmten Radius um den Ort der Erfassung der Fahrwegdaten verlassen hat.

2. Verfahren nach Anspruch 1 wobei, wenn die erste Anzahl größer als eins ist, Fahrwegdaten-Nachrichten aus Fahrwegdaten und zugehörigem Ort der Erfassung in einer ersten Reihenfolge gesendet werden.

3. Verfahren nach Anspruch 2, wobei die erste Reihenfolge eine von der zeitlichen Reihenfolge der Erfassung unabhängige, zufällige Reihenfolge ist.

4. Verfahren nach Anspruch 2, wobei zwei aufeinander folgende Übertragungen von Fahrwegdaten-Nachrichten in einem zufällig ausgewählten zeitlichen Abstand erfolgen.

5. Verfahren nach Anspruch 1, wobei in der Fahrwegdaten-Nachricht eine Angabe über einen Zeitraum übertragen wird, innerhalb dessen die Fahrwegdaten erfasst wurden.

6. Verfahren nach Anspruch 1, wobei der Radius und/oder das erste Zeitintervall in Abhängigkeit von der Dringlichkeit der Übermittlung der Fahrwegdaten, einer durchschnittlichen Fahrgeschwindigkeit des Fahrzeugs um den Zeitpunkt der Erfassung oder einer Mindestanzahl von Straßenverzweigungen innerhalb des Radius bestimmt werden, oder von einem Benutzer einstellbar sind.

7. Verfahren nach Anspruch 1, wobei Fahrwegdaten und Ort der Erfassung in einem Nutzdatenbereich einer Nachricht übertragen werden, und wobei ein Header der Nachricht eine Signatur des sendenden Fahrzeugs enthält.

8. Verfahren nach Anspruch 7, wobei der Nutzdatenbereich der Nachricht mit einem öffentlichen Schlüssel der Datenbank verschlüsselt ist.

9. Verfahren nach Anspruch 7, wobei die Nachricht von dem erfassenden Fahrzeug zunächst an ein anderes Fahrzeug übertragen wird, wobei das andere Fahrzeug die Signatur des sendenden Fahrzeugs im Header der Nachricht gegen seine eigene Signatur austauscht, bevor die Nachricht an die Datenbank übertragen wird.

10. Verfahren nach Anspruch 9, wobei das empfangende Fahrzeug die Signatur des sendenden Fahrzeugs validiert.

11. Verfahren nach Anspruch 9, wobei die Nachricht ein Merkmal enthält, das sie als weitergeleitete Nachricht oder als Originalnachricht kennzeichnet.

## Claims

1. Method for transmitting route data captured by a traveling vehicle to a database arranged separately from the vehicle, comprising:
- capturing at least a first number of route data records, wherein a route data record comprises route data and also a location and a time of capture, and storing the captured route data records in a memory of the vehicle; and
- sending route data messages to the database when at least the first number of route data records is available in the memory, wherein a route data message comprises route data and an associated location of capture, a route data message being sent at a time randomly selected within a first time interval after the capture of the route data and/or when the vehicle has left a predetermined radius around the location of capture of the route data.

2. Method according to Claim 1, wherein if the first number is greater than one, route data messages comprising route data and the associated location of capture are sent in a first order.

3. Method according to Claim 2, wherein the first order is a random order independent of the chronological order of capture.

4. Method according to Claim 2, wherein two successive transmissions of route data messages are effected at a randomly selected interval of time.

5. Method according to Claim 1, wherein a statement about a period within which the route data have been captured is transmitted in the route data message.

6. Method according to Claim 1, wherein the radius and/or the first time interval are determined on the basis of the urgency of the transmission of the route data, an average speed of travel of the vehicle around the time of the capture or a minimum number of road junctions within the radius, or are adjustable by a user.

7. Method according to Claim 1, wherein route data and location of capture are transmitted in a user data area of a message, and wherein a header of the message contains a signature of the sending vehicle.

8. Method according to Claim 7, wherein the user data area of the message is encrypted using a public key of the database.

9. Method according to Claim 7, wherein the message from the capturing vehicle is first of all transmitted to another vehicle, the other vehicle replacing the signature of the sending vehicle in the header of the message with its own signature before the message is transmitted to the database.

10. Method according to Claim 9, wherein the receiving vehicle validates the signature of the sending vehicle.

11. Method according to Claim 9, wherein the message contains a feature identifying it as a forwarded message or as an original message.

## Revendications

1. Procédé de transfert de données de trajet détectées par un véhicule en circulation à une banque de données disposée séparément du véhicule, consistant à :
- détecter au moins un premier nombre d'ensembles de données de trajet, un ensemble de données de trajet comprenant des données de trajet ainsi qu'un lieu et un instant de la détection, et stocker les ensembles de données de trajet détectés dans une mémoire du véhicule ; et
- lorsqu'au moins le premier nombre d'ensembles de données de trajet est présent dans la mémoire, envoyer des messages de données de trajet à la banque de données, un message de données de trajet comprenant des données de trajet et un lieu associé de la détection, un message de données de trajet étant envoyé à un instant sélectionné de manière aléatoire à l'intérieur d'un premier intervalle de temps suivant la détection des données de trajet et/ou lorsque le véhicule a quitté un rayon prédéterminé autour du lieu de la détection des données de trajet.

2. Procédé selon la revendication 1, dans lequel, lorsque le premier nombre est supérieur à un, des messages de données de trajet obtenus à partir des données de trajet et du lieu associé de la détection sont envoyés selon une première séquence.

3. Procédé selon la revendication 2, dans lequel la première séquence est une séquence aléatoire indépendante de la séquence temporelle de la détection.

4. Procédé selon la revendication 2, dans lequel deux transferts successifs de messages de données de trajet se produisent avec un espacement temporel sélectionné de manière aléatoire.

5. Procédé selon la revendication 1, dans lequel une indication concernant la période de temps à l'intérieur de laquelle les données de trajet ont été détectées est transférée dans le message de données de trajet.

6. Procédé selon la revendication 1, dans lequel le rayon et/ou le premier intervalle de temps sont déterminés en fonction de l'urgence du transfert des données de trajet, d'une vitesse moyenne du véhicule à l'instant de la détection ou d'un nombre minimum de ramifications de rues à l'intérieur dudit rayon, ou sont réglables par un utilisateur.

7. Procédé selon la revendication 1, dans lequel des données de trajet et un lieu de la détection sont transférés dans une zone de données utiles d'un message, et dans lequel un en-tête du message contient une signature du véhicule émetteur.

8. Procédé selon la revendication 7, dans lequel la zone de données utiles du message est cryptée avec une clé publique de la banque de données.

9. Procédé selon la revendication 7, dans lequel le message est d'abord transféré depuis le véhicule effectuant la détection vers un autre véhicule, l'autre véhicule échangeant la signature du véhicule émetteur contenue dans l'en-tête du message contre sa propre signature avant que le message soit transféré à la banque de données.

10. Procédé selon la revendication 9, dans lequel le véhicule récepteur valide la signature du véhicule émetteur.

11. Procédé selon la revendication 9, dans lequel le message contient une caractéristique qui l'identifie comme étant un message réexpédié ou un message original.
